# EUROPEAN PATENT SPECIFICATION

(11) **EP 4 563 505 B1**
(45) Date of publication and mention of the grant of the patent: **09.09.2026**
(21) Application number: 24216561.1
(22) Date of filing: 29.11.2024
(51) Int. Cl.: B65H 3/08, B65H 5/14, B25J 15/06

(54) **DEVICE FOR PICKING UP AND RELEASING ELECTRODES FOR ELECTROLYTIC CELLS AND HANDLING APPARATUS COMPRISING SAID DEVICE**
VORRICHTUNG ZUM AUFNEHMEN UND FREIGEBEN VON ELEKTRODEN FÜR ELEKTROLYTISCHE ZELLEN UND HANDHABUNGSVORRICHTUNG MIT DIESER VORRICHTUNG
DISPOSITIF DE PRÉHENSION ET DE LIBÉRATION D'ÉLECTRODES POUR CELLULES ÉLECTROLYTIQUES ET APPAREIL DE MANIPULATION COMPRENANT LEDIT DISPOSITIF

(30) Priority: 01.12.2023 IT 202300025752
(43) Date of publication of application: 04.06.2025
(73) Proprietor: Andritz Sovema S.r.l., 37069 Villafranca di Verona (VR) (IT)
(72) Inventor: FERRARESE, Luciano, 37030 Lavagno (VR) (IT)
(74) Representative: Gallo, Luca

(56) References cited:
- US-A- 3 796 455
- US-A1- 2022 085 418
- US-B2- 10 392 212

## Description

### Field of application

The present invention regards a device for picking up and releasing electrodes for electrolytic cells and a handling apparatus for moving electrodes, according to the preamble of the respective independent claims.

More in detail, the present device is intended to be employed in a plant for producing electrolytic cells, in particular is the step of assembling the latter, in order to handle one or more electrodes during the attainment of the electrolytic cells themselves. In particular, the device is advantageously intended to be fixed to a handling apparatus, for example in order to handle the electrodes for stacking them, to attain the stacking step during the production of the electrolytic cells themselves.

The present device is therefore advantageously intended to be employed in the field of production of batteries or accumulators, advantageously lithium batteries, in particular during the process of production of electrolytic cells, such as for example lithium ion electrolytic cells.

### State of the art

Electrical accumulators (or batteries) are known in the field of production of devices for storing electrical energy, which are formed by a set of electrolytic cells capable of converting the energy produced by chemical reactions into electrical energy with low voltage and direct current, and vice versa. In particular, increasingly widespread on the market is the request for batteries or accumulators with lithium ion electrolytic cells, employed for example in the field of electric-supply vehicles, or in the fields of portable home appliances, such as computers, telephones, etc.

Generally, the electrodes have an extremely reduced thickness (generally on the order of hundreds of µm) and are coated with a layer of chemically active material for the storage of electrical energy, such as for example graphite, metallic lithium, cobalt, etc. In particular, there is increasing use on the market of electrolytic cells of large size (for example used in the automobile field), which provide for the use of sheet-like electrodes of large size.

As is known, the production of the electrolytic cells provides for a preliminary step of physical production of the electrolytic cells, and a subsequent step of formation.

More in detail, in the step of physical production of an electrolytic cell, the following are attained: a containment casing which can have a prismatic, cylindrical or sack shape and internally defines a cavity, and an internal core, which comprises a plurality of positive electrodes (anode) and negative electrodes (cathode) placed alternated from each other and divided by separators (in a manner such that an anode and a cathode do not come into contact with each other). The core is intended to be placed within the cavity of the containment casing together with an electrolyte necessary for the chemical reaction. The core of the electrolytic cell is attained by means of a step known in the technical jargon with the term of stacking, in which the electrodes are stacked on each other (with the separators interposed). Since, in the stacking step, it is necessary to stack a greater number of electrodes, and a high precision is required in positioning the same, a handling apparatus is generally employed in order to execute it. On such handling apparatus, a device is fixed that is susceptible of retaining an electrode in order to move it.

For example, the handling apparatus is susceptible of picking up an electrode from a store and moving it up to a station, at which the stacking of the electrolytic cell is attained.

In particular, the presence in an electrolytic cell even of only one ruined or damaged electrode involves a loss of performances of the electrolytic cell and can also involve a safety risk, in particular increasing the possibility of short circuit of the electrolytic cell itself with consequent thermal run-away.

Known on the market are devices for picking up and releasing electrodes for electrolytic cells comprising a support structure intended to be fixed to a handling apparatus, and a plurality of suckers, which are fixed to the support structure and are susceptible of generating under-pressure in order to retain the electrode during movement. More in detail, the pick-up devices of known type are attained by means of Venturi effect or Bernoulli effect suckers, which as is known exploit a jet of compressed air in order to generate the aforesaid under-pressure.

The pick-up devices for electrodes of electrolytic cells described briefly up to now have shown that in practice they do not lack drawbacks.

A first drawback lies in the fact that the Venturi effect or Bernoulli effect suckers create a localized under-pressure and, therefore, each of these is susceptible of retaining therewith only a small portion of the electrode. In particular, it it is necessary to move the sheetlike electrodes of large size, multiple suckers are necessary, preferably uniformly distributed over the entire surface extension of the electrode itself. However, since the suckers are placed spaced from each other, and due to the reduced thickness of the electrode, with such sucker type bulging is created on the surface of the electrode itself, which can involve damage thereof during movement.

A further drawback lies in the fact that, as is known, the stacking step is executed in a chamber with controlled temperature and humidity, known in the technical jargon with the term of dry-room and, consequently, the use of Bernoulli or Venturi effect suckers in the pick-up devices of known type involves the introduction in the dry-room itself of a high quantity of compressed air. In particular, the compressed air must be treated before being introduced in the dry-room in order to disturb the conditions within the dry-room itself in the least possible manner, thus involving a high energy consumption (which is added to the energy consumption necessary for compressing air) which translates into a high production cost for the electrolytic cells.

US 3 796 455 A discloses a device according to the preamble of claim 1.

### Presentation of the invention

In this situation, the problem underlying the present invention is that of overcoming the drawbacks manifested by the prior art known up to now, by providing a pick-up device for electrodes of electrolytic cells, which allows retaining electrodes of large size without risk of damaging them.

Further object of the present invention is to provide a pick-up device for electrodes of electrolytic cells, which allows preventing the introduction of compressed air within a dry-room.

Further object of the present invention is to provide a pick-up device for electrodes of electrolytic cells, which allows reducing the production costs of electrolytic cells. Further object of the present invention is to provide a pick-up device for electrodes of electrolytic cells, which ensures high operative flexibility.

Further object of the present invention is to provide a pick-up device for electrodes of electrolytic cells, which is simple and entirely reliable in operation.

### Brief description of the drawings

The technical characteristics of the invention, according to the aforesaid objects, are clearly seen in the contents of the below-reported claims and the advantages thereof will be more evident in the following detailed description, made with reference to the enclosed drawings, which represent a merely exemplifying and non-limiting embodiment of the invention, in which:

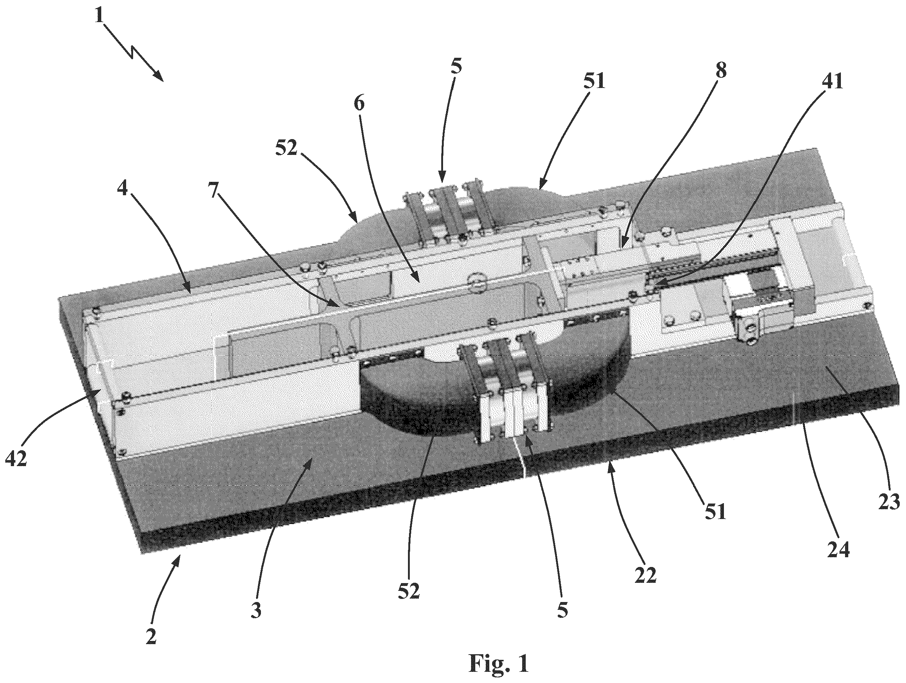

- figure 1 shows a perspective view of a device for picking up and releasing electrodes for electrolytic cells, object of the present invention, with several elements hidden in order to better highlight other elements;
- figure 2 shows a top section view of the device of figure 1 with a movable body in a first position;
- figure 3 shows a top section view of the device of figure 1 with the movable body in a second position;
- figure 4a shows a top section view of the device of figure 1 with the movable body in a first intermediate position;
- figure 4b shows a top section view of the device of figure 1 with the movable body in a second intermediate position.

### Detailed description of a preferred embodiment

With reference to the enclosed drawings, reference number 1 overall indicates one embodiment of a device for picking up and releasing electrodes for electrolytic cells, object of the present invention.

The device is intended to be used in a plant per the production of electrolytic cells, and in particular it is adapted to be employed for picking up and releasing electrodes, or generally for the handling, moving, retention etc. of electrodes.

Advantageously, the device 1, object of the present invention, is intended to be employed for attaining the operation of stacking electrodes, in which, as is known, a plurality of positive electrodes (anode) and negative electrodes (cathode) are stacked on each other in an alternating manner (generally with a suitable layer of separator material interposed between two of these in order to prevent short circuits) so as to attain the internal core of the electrolytic cell intended to be placed within a containment casing together with the electrolyte. In particular, the stacking operation is generally executed within a chamber with controlled temperature and humidity, known in the technical jargon with the term dry-room.

The device 1, object of the present invention, comprises a case 2, which is internally hollow, is provided with at least one connection opening 21 and with at least one perforated wall 22 adapted to retain and release at least one electrode. More in detail, the perforated wall 22 and the connection opening 21 are susceptible of being traversed by an air flow. In this manner, the case 2 can be traversed by the air flow that enters through the perforated wall 22 and exits through the connection opening 21 (or vice versa).

In addition, the device 1 comprises air conveyance means 3 mechanically connected to the case 2 and in fluid communication with the connection opening 21 in order to force the aforesaid air flow within the case 2 through the perforated wall 22. Advantageously, the air conveyance means 3 are arranged for suctioning air through the perforated wall 22 and/or for blowing air through the perforated wall 22.

In this manner, in operation, when the air conveyance means 3 suction air through the perforated wall 22, these generate under-pressure at the perforated wall 22 itself susceptible of inducing suction through the latter and retaining an electrode on the perforated wall itself, in particular in abutment thereon. In addition, when the air conveyance means 3 blow air through the perforated wall 22, these generate an over-pressure at the perforated wall 22 itself susceptible of inducing the blowing air through the latter and forcing the detachment of an electrode that was previously retained in abutment thereon.

According to the idea underlying the present invention, the air conveyance means 3 comprise a ventilation duct 4, which is placed in fluid connection with the connection opening 21 of the case 2 and with the outside environment through a suction opening 41, and a discharge opening 42.

Advantageously, the aforesaid suction opening 41 is intended to be traversed by an air flow directed by the external environment towards the interior of the ventilation duct 4 and the aforesaid discharge opening 42 is preferably intended to be traversed by an air flow directed by the external environment towards the interior of the ventilation duct 4. In addition, the air conveyance means 3 comprise at least one fan 5, which is connected to the ventilation duct 4 by means of an upstream connection 51 and a downstream connection 52 with respect to the connection opening 21 of the case 2.

In this context, by "upstream" and "downstream" it will be intended with respect to a travel sense of the ventilation duct 4 from the suction opening 41 to the discharge opening 42.

In other words, the upstream connection 51 is advantageously placed closer to the suction opening 41 of the ventilation duct 4 than the aforesaid connection opening 21. In addition, the downstream connection 52 is placed closer to the discharge opening 42 of the ventilation duct 4 than the aforesaid connection opening 21.

Advantageously, the aforesaid fan 5 is susceptible of generating a finite and localized pressure jump between the upstream connection 51 and the downstream connection 52, preferably inducing, at the downstream connection 51, a downstream pressure value Pv greater than the ambient pressure value Pa, and inducing at the upstream connection 52 an upstream pressure value Pm smaller than the ambient pressure value Pa. In this manner, the fan 5 is susceptible of suctioning air from the ventilation duct 4 through the upstream connection 51 due to the upstream pressure value Pm, and of releasing air into the ventilation duct 4 through the downstream connection 52 due to the downstream pressure value Pv.

In accordance with the embodiment variant represented in the enclosed figures, the air conveyance means 3 comprise two fans 5, each of which connected to the ventilation duct 4 by means of a corresponding upstream connection 51 and a corresponding downstream connection 52.

The air conveyance means 3 comprise, in addition, a shutter 6 placed to intercept the ventilation duct 4 and arranged to take on at least one suction configuration and at least one blowing configuration.

More in detail, in the aforesaid suction configuration, the shutter 6 places, in fluid communication, the downstream connection 52 of the ventilation duct 4 with the discharge opening 42 of the ventilation duct 4 and the upstream connection 51 of the ventilation duct 4 with the connection opening 21 of the case 2, by suctioning air from the perforated wall 22 of the case 2 in order to retain an electrode in abutment thereon.

Preferably, when the shutter 6 takes on the suction configuration, the upstream connection 51 is in fluid communication only with the case 2 (through the connection opening 21) and the downstream connection 52 is preferably in fluid communication only with the outside environment (through the discharge opening 42 of the ventilation duct 4).

In this manner, when the shutter 6 takes on the suction configuration, the fan 5 induces an air flow from the perforated wall 22 of the case 2, through which the air is suctioned from the outside environment in order to generate at the perforated wall 22 itself a under-pressure so as to retain the electrode in abutment against it, towards the discharge opening 42 of the ventilation duct (in particular by traversing, in order, the connection opening 21, the upstream connection 52 and the downstream connection 51), through which the air is once again released into the external environment.

Preferably, with the shutter 6 in the suction configuration, the air conveyance means 3 generate, at the perforated wall 22 of the case 2, a minimum pressure value Pmin, advantageously lower the ambient pressure value Pa.

In addition, according to the invention, in the aforesaid blowing configuration the shutter 6 places in fluid communication the upstream connection 51 of the ventilation duct 4 with the suction opening 41 of the ventilation duct 4 and the downstream connection 52 of the ventilation duct 4 with the connection opening 21 of the case 2 in order to suction air from the external environment through the suction opening 41, blowing it through the perforated wall 22 of the case 2 in order facilitate the detachment of an electrode therefrom.

Preferably, when the shutter 6 takes on the blowing configuration, the downstream connection 52 is in fluid communication only with the case 2 (through the connection opening 21) and the upstream connection 51 is preferably in fluid communication only with the outside environment (through the suction opening 41 of the ventilation duct 4). Consequently, when the shutter 6 takes on the suction configuration, the fan 5 induces an air flow from the suction opening 41 of the ventilation duct 4, through which the air is suctioned from the outside environment, towards the perforated wall 22 of the case 2 (in particular traversing, in order, the upstream connection 52, the downstream connection 51 and the connection opening 21 of the case 2), through which the air is released once again into the external environment in order to generate at the perforated wall 22 itself an over-pressure so as to facilitate the detachment of the electrode therefrom.

Preferably, with the shutter 6 in the blowing configuration, the air conveyance means 3 generate a maximum pressure value Pmax at the perforated wall 22 of the case 2, advantageously greater than the ambient pressure value Pa.

In this manner, with the device 1, object of the present invention, it is possible to retain and release an electrode, for example so as to move it in order to attain the stacking operation during the production of an electrolytic cell, suctioning air and releasing it into the same environment where the electrode itself is situated, without using air coming from a different environment, such as for example a compressed air circuit.

In particular, such characteristic results particularly advantageous in the event in which the device 1, object of the present invention, is intended to be used for handling electrodes within a dry-room with controlled humidity and temperature. Indeed, in such situation, the device 1 is arranged in order to retain and release the electrode by means of an air flow that originates and terminates within the same dry-room, not requiring, consequently, an external air source which, as is known, requires being treated before being introduced in the dry-room, considerably increasing the costs for producing the electrolytic cells.

Advantageously, the shutter 6 is arranged to take on at least one intermediate configuration, in which it places the upstream connection 51 of the ventilation duct 4 in fluid communication with the suction opening 41 of the ventilation duct 4 itself and with the connection opening 21 of the case 2. In addition, the shutter 6 in the aforesaid intermediate configuration preferably places the downstream connection 52 of the ventilation duct 4 in fluid communication with the discharge opening 42 of the ventilation duct 4 itself and with the connection opening 21 of the case 2 in order to adjust the under-pressure and/or the over-pressure generated at the perforated wall 22 of the case 2.

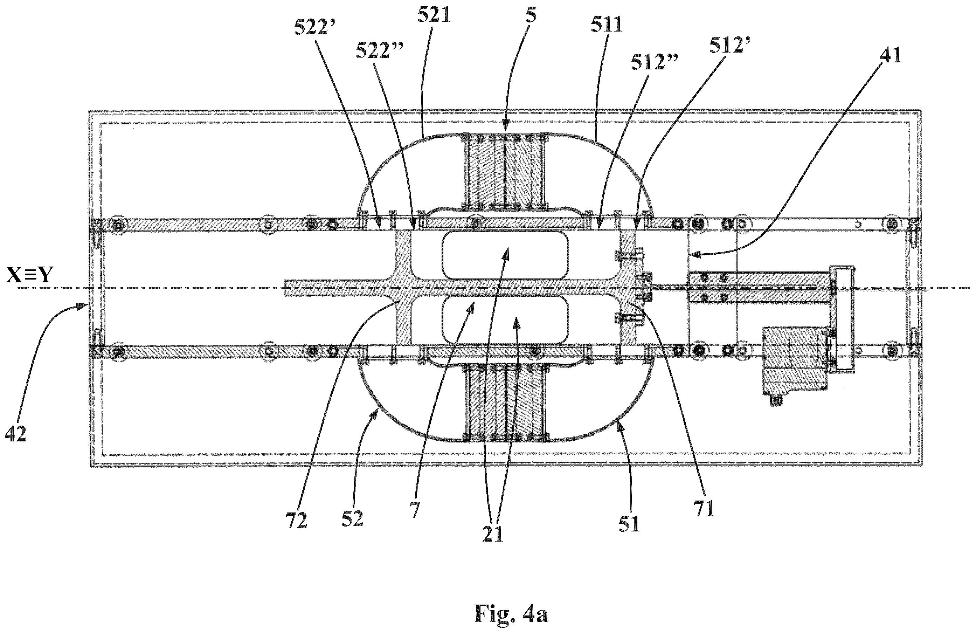

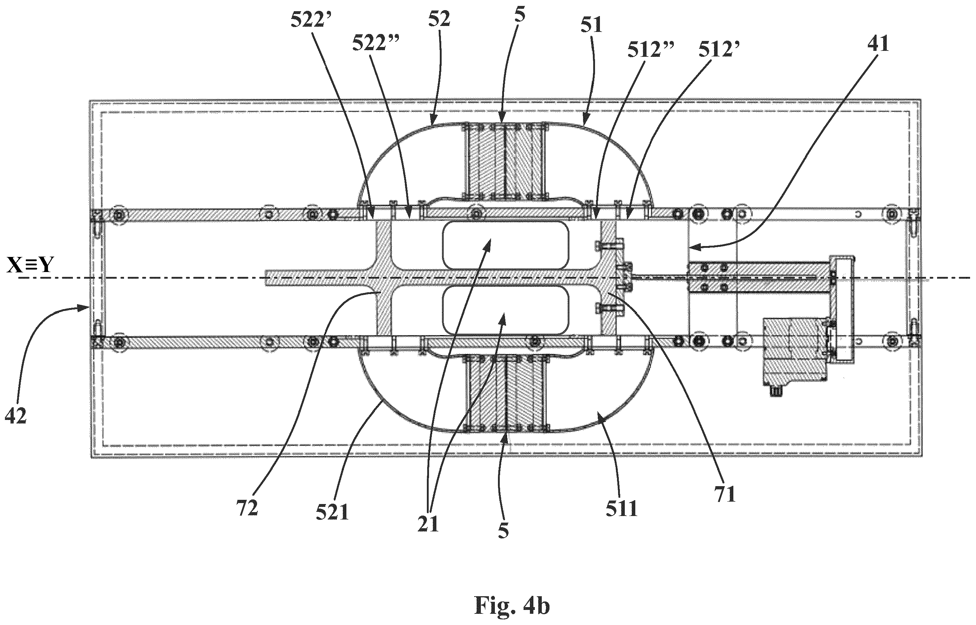

In particular, as seen in figures 4a and 4b, when the shutter 6 takes on the intermediate configuration, the air flow induced by the fan 5 towards the upstream connection 51 is fed by air coming from both the case 2 (through the connection opening 21) and from the outside environment (through the suction opening 41 of the ventilation duct 4). Since the fan 5 is arranged for processing a specific air flow, the air flow coming from the outside environment through the suction opening 41 of the ventilation duct 4 determines a consequent reduction of the air flow coming from the case 2 towards the upstream connection 52.

Nevertheless, the pressure value at the perforated wall 22 of the suction case 2 depends in a direct manner also on the air flow that traverses the perforated wall 22 and, thus, a reduction of the aforesaid flow suctioned through the perforated wall 22 determines a reduction of the under-pressure at the perforated wall 22 of the case 2, in particular with respect to the level of under-pressure that there is in the event in which the shutter 6 takes on the suction configuration.

In an entirely similar manner, a reduction of the flow blown through the perforated wall 22 determines a reduction of the over-pressure at the perforated wall 22 in particular with respect to the level of over-pressure that there is in the event in which the shutter 6 takes on the blowing configuration.

Advantageously, the shutter 6 is arranged to take on multiple intermediate configurations, in each of which the air conveyance means 3 induce, at the perforated wall 22 of the case 2, a specific pressure value preferably comprised between the maximum pressure value Pmax and the minimum pressure value Pmin.

Advantageously, the device 1, object of the present invention, comprises a logic control unit (not represented in the enclosed figures), which is in data connection with the shutter 6 and is susceptible of actuating the latter to adjust the pressure value (whether this is lower or greater than the ambient pressure value Pa) at the perforated wall 22 of the case 2, consequently adjusting the force exerted on the electrode (whether this is attractive or repulsive).

Preferably, the logic control unit is configured for modifying the configuration taken on by the shutter 6 in an automated manner, for example based on a command imparted by an operator based on a procedure for handling the electrode that is pre-established and programmed in the logic control unit itself.

Advantageously, the case 2 has substantially box-like shape and comprises the aforesaid perforated wall 22, which is substantially flat, an opposite upper wall 23, which is extended substantially parallel to the perforated wall 22, and a lateral wall 24, preferably piecewise, placed to connect between the perforated wall 22 and the upper wall 23. Advantageously, the perforated wall 22 comprises a plurality of holes distributed thereon in a preferably equidistant manner, which define the permeability of the perforated wall 22 itself.

Without departing from the protective scope of the present invention, the perforated wall 22 can be made of a porous polymer material, which is permeable to air passage, and hence does not comprise the aforesaid holes. In this context, with the term "perforated" it must be intended that it allows the passage, whether through the aforesaid holes or through the typical pores of a porous material.

Preferably, the aforesaid perforated wall 22 is made of metal material and is advantageously coated with a polymer material in a manner such to not damage the electrode retained thereon. Without departing from the protective scope of the present invention, the perforated wall 22 can be made entirely of polymer material.

Preferably, the air conveyance means 3 are mechanically connected to the upper wall 23 of the case 2.

Advantageously, the connection opening 21 of the case 2 is made on the upper wall 23 of the case 2 itself.

In this manner, the perforated wall 22 of the case 2 is entirely dedicated to retaining an electrode.

In accordance with the embodiment represented in the enclosed figures, the case 2 comprises two connection openings 21 that are side-by-side, preferably attained on the upper wall 23.

Preferably, the ventilation duct 4 is extended along an extension direction X between the suction opening 41 and the discharge opening 42.

Advantageously, the ventilation duct 4 comprises a communication opening, which is in fluid communication with the connection opening 21 of the case 2 in order to allow the passage of air between the case 2 and the ventilation duct 4.

Preferably, the ventilation duct 4 is fixed on the upper wall 23 of the case 2 in abutment against it, and is advantageously placed with its communication opening at the connection opening 21 of the case 2 and aligned therewith.

According to a different embodiment not represented in the enclosed figures, the ventilation duct is placed spaced from the case 2 and the air conveyance means 3 preferably comprise a connection duct which is extended between the connection opening 21 of the case 2 and the communication opening of the ventilation duct 4 in order to allow the passage of air between the case 2 and the ventilation duct 4.

Advantageously, the ventilation duct 4 comprises a central section 43, which is extended along the extension direction X between the upstream connection 51 and the downstream connection 52 and is in fluid communication with the connection opening 21 of the case 2.

Preferably, the upstream connection 51 preferably comprises a first auxiliary duct 511, which is extended between an upstream opening 512 attained on the ventilation duct 4 and the fan 5. Preferably, the downstream connection 52 comprises a second auxiliary duct 521, which is extended between a downstream opening 522 attained on the ventilation duct 4 and the fan 5.

In accordance with the embodiment represented in the enclosed figures, the ventilation duct 4 is provided with one upstream opening 512 for each upstream connection 51, which are aligned with each other with respect to a direction perpendicular to the extension direction X. Preferably, the ventilation duct 4 is provided with one downstream opening 522 for each downstream connection 52, which are aligned with each other with respect to a direction perpendicular to the extension direction X.

Advantageously, the aforesaid central section 43 is extended between the aforesaid upstream opening 512 and the downstream opening 522.

Preferably, the ventilation duct 4 comprises an inlet section 44, which is extended along the extension direction X between the suction opening 41 and the central section 43 and is in fluid communication with the upstream connection 51.

Advantageously, the upstream opening 512 is attained at the inlet section 44 of the ventilation duct 4.

Preferably, the ventilation duct 4 comprises an outlet section 45, which is extended along the extension direction X between the central section 43 and the discharge opening 42 and is in fluid communication with the downstream connection 52.

Advantageously, the downstream opening 522 is attained at the outlet section 45 of the ventilation duct 4.

Preferably, the shutter 6 comprises a movable body 7, which is slidably inserted in the ventilation duct 4 and is movable along a movement direction Y, advantageously parallel to the extension direction X of the ventilation duct 4 itself, at least between a first position, in which the shutter 6 takes on the suction configuration, and a second position, in which the shutter 6 takes on the blowing configuration.

Preferably, the movable body 7 is movable into at least one intermediate position, in which the shutter 6 takes on a corresponding intermediate configuration.

In this context, by "intermediate" position it will be intended any one position interposed between the first position and the second position, which, in particular, constitute the limits of movement of the movable body 7 along the movement direction Y. Preferably, with the movable body 7 in the first position, the shutter 6 takes on the suction configuration in which it induces the reduced maximum pressure at the perforated wall 22 of the case 2 and advantageously the pressure at the perforated wall 22 itself takes on the minimum pressure value Pmin (lower than the ambient pressure value). Preferably, with the movable body 7 in the second position, the shutter 6 takes on the blowing configuration in which it induces the maximum over-pressure at the perforated wall 22 of the case 2 and advantageously the pressure at the perforated wall 22 itself takes on the maximum pressure value Pmax (greater than the ambient pressure value Pa).

In this manner, by adjusting the position of the movable body 7 along the movement direction Y between the first position and the second position, it is possible to adjust the pressure value (whether this is smaller or greater than the ambient pressure value Pa) at the perforated wall 22 of the case 2, consequently adjusting the force exerted on the electrode (whether this is attractive or repulsive).

Advantageously, the shutter 6 comprises at least one actuator 8 mechanically connected to the aforesaid movable body 7 and actuatable to move the latter at least between the first position and the second position.

Preferably, the actuator 8 is a linear actuator with electrical actuation.

Advantageously, the logic control unit is in data connection with the actuator 8 and is susceptible of actuating the latter in order to move the movable body 7 along the movement direction Y between the first and the second position, so as to adjust the force exerted on the electrode (whether this is attractive or repulsive). In this manner, the movement of the movable body 7 along the movement direction Y can occur in an automated manner.

Preferably, the movable body 7 comprises a first transverse wall 71, which is slidably inserted in the ventilation duct 4 and is placed to close a corresponding first transverse section of the ventilation duct 4 in order to prevent the passage of air along the corresponding first transverse section itself.

Advantageously, the first transverse wall 71 is extended along the movement direction Y between a first face 711 directed towards the suction opening 41 of the ventilation duct 4, and an opposite second face 712, and is provided with a first perimeter edge placed to connect between the first face 711 and the second face 712.

Preferably, the first transverse wall 71 is flat and is extended on a first lying plane preferably perpendicular to the extension direction X of the ventilation duct 4.

Advantageously, the first transverse wall 71 comprises first sealing means fixed at the first perimeter edge and susceptible of sealing between the first transverse wall 71 and the ventilation duct 4 in order to prevent the passage of air through the first transverse section of the ventilation duct 4 itself at which the first transverse wall 71 is placed. Preferably, with the movable body 7 in the first position, the first transverse wall 71 is placed in the inlet section 44 of the ventilation duct 4, interposed between the suction opening 41 of the ventilation duct 4 and the upstream connection 51 in order to prevent the passage of air from the outside environment towards the fan 5.

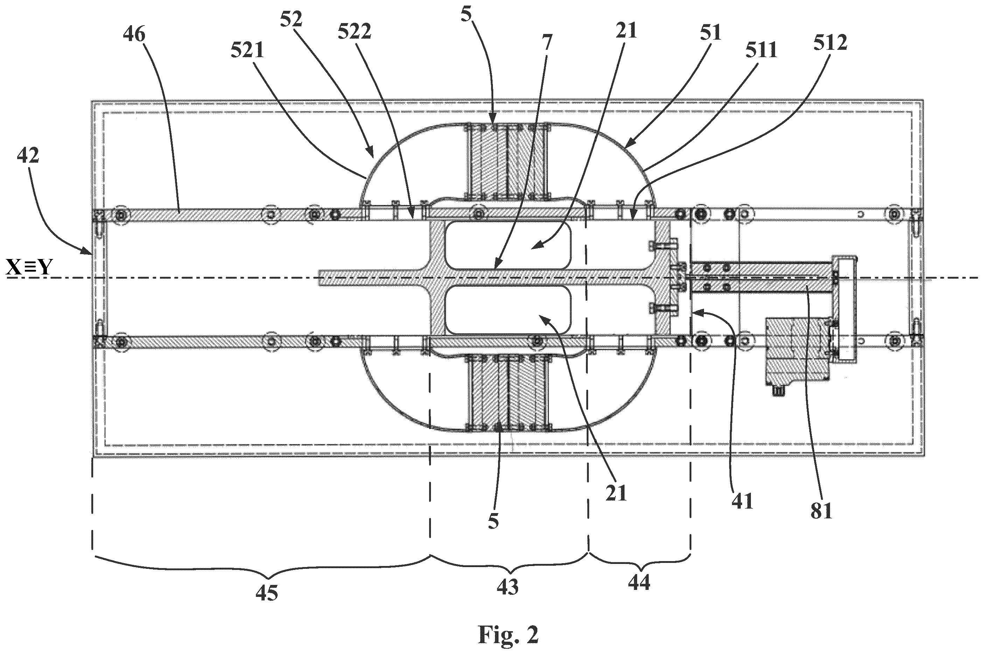

In this manner, as seen in figure 2, with the movable body 7 in the first position, the first transverse wall 71 is placed in a manner such to place the upstream connection 51 only in fluid communication with the communication opening 21 of the case 2. In such situation, the air flow induced by the fan 5 towards the upstream connection 51 only comes from the case 2 itself and, therefore, the under-pressure at the perforated wall 22 is at a maximum.

Advantageously, with the movable body 7 in the second position, the first transverse wall 71 is placed in the central section 43 of the ventilation duct 4, interposed between the connection opening 21 of the case 2 and the upstream connection 51 in order to prevent the passage of air from the suction case 2 towards the fan 5.

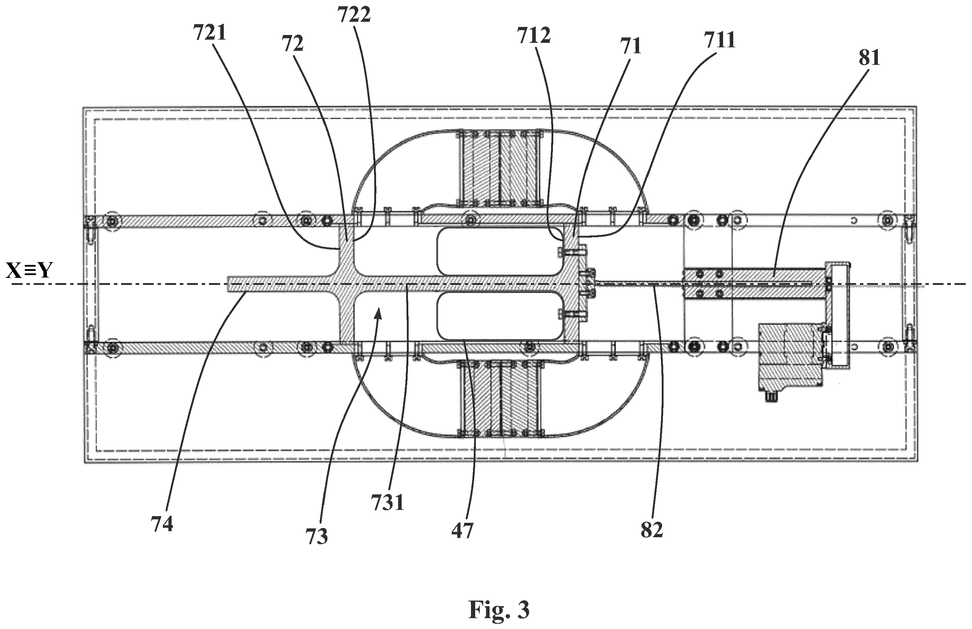

In this manner, as is seen in figure 3, with the movable body 7 in the second position, the first transverse wall 71 is placed in a manner such to place the upstream connection 51 in fluid communication only with the suction opening 41 of the ventilation duct 4. In such situation, the air flow induced by the fan 5 towards the upstream connection 51 only comes from the outside environment and therefore the blowing through the perforated wall 22 is at a maximum.

Advantageously, with the movable body 7 in an intermediate position, the first transverse wall 71 is placed at the upstream connection 51, preferably at the upstream opening 512. Preferably, with reference to figures 4a and 4b, with the movable body 7 in an intermediate position the first transverse wall 71 divides the section of the upstream opening 512 of the upstream connection 51 into a first portion 512', which is in fluid communication with the suction opening 41 of the ventilation duct 4, and a second portion 512", which is in fluid communication with the communication opening 21 of the case 2.

Advantageously, the ratio between the area of the first portion 512' and of the second portion 512" of the section of the upstream opening 512 depends directly on the position of the first transverse wall 71 along the movement direction Y.

In this manner, the position of the first transverse wall 71 determines the quantity of air flow directed towards the fan 5 respectively coming from the outside environment and from the case 2, consequently adjusting the suction or the blowing at the perforated wall 22 of the case 2.

Preferably, the movable body 7 comprises a second transverse wall 72, which is slidably inserted in the ventilation duct 4 and is placed to close a corresponding second transverse section of the ventilation duct 4 in order to prevent the passage of air along the corresponding second transverse section itself.

Advantageously, the second transverse wall 72 is extended along the movement direction Y between a third face 721 directed towards the discharge opening 42 of the ventilation duct 4, and an opposite fourth face 722 (preferably directed towards the second face 712 of the first transverse wall 71), and is provided with a second perimeter edge placed to connect between the third face 721 and the fourth face 722.

Preferably, the second transverse wall 72 is flat and is extended on a second lying plane preferably perpendicular to the extension direction X of the ventilation duct 4.

Advantageously, the second transverse wall 72 comprises second sealing means fixed at the second perimeter edge and susceptible of sealing between the second transverse wall 72 and the ventilation duct 4 in order to prevent the passage of air through the second transverse section of the ventilation duct 4 itself at which the second transverse wall 72 is placed.

Preferably, with the movable body 7 in the first position, the second transverse wall 72 is placed in the central section 43 of the ventilation duct 4, interposed between the connection opening 21 of the case 2 and the downstream connection 52 in order to prevent the passage of air from fan 5 towards the case 2.

In this manner, as seen in figure 2, with the movable body 7 in the first position, the second transverse wall 72 is placed in a manner such to place the downstream connection 52 in fluid communication only with the discharge opening 42 of the ventilation duct 4. Advantageously, with the movable body 7 in the second position, the second transverse wall 72 is placed in the outlet section 45 of the ventilation duct 4, interposed between the downstream connection 52 and the discharge opening 42 in order to prevent the passage of air from the fan 5 towards the discharge opening 42.

In this manner, as seen in figure 3, with the movable body 7 in the second position, the second transverse wall 72 is placed in a manner such to place the downstream connection 52 in fluid communication only with the connection opening 21 of the case 2. In such situation, the air flow induced by the fan 5 exiting from the downstream connection 52 is only directed towards the case 2 and, therefore, the blowing through the perforated wall 22 is at a maximum.

Advantageously, with the movable body 7 in an intermediate position, the second transverse wall 72 is placed at the downstream connection 52, preferably at the downstream opening 522. Preferably, with reference to figures 4a and 4b, with the movable body 7 in an intermediate position the second transverse wall 72 divides the section of the downstream opening 522 of the downstream connection 52 into a third portion 522', which is in fluid communication the discharge opening 42 of the ventilation duct 4, and a fourth portion 522'', which is in fluid communication with the communication opening 21 of the case 2.

Advantageously, the ratio between the area of the third portion 522' and of the fourth portion 522'' of the section of the downstream opening 522 depends directly on the position of the second transverse wall 72 along the movement direction Y.

In this manner, the position of the second transverse wall 72 determines the quantity of air flow exiting from the downstream connection 52 directed respectively towards the outside environment and towards the case 2, consequently adjusting the suction or the blowing at the perforated wall 22 of the case 2.

For example, in figure 4a, the movable body 7 is represented in a first intermediate position, in particular closer to the first position than to the second position. In this situation, as seen in the image, the area of the first portion 512' of the upstream opening 512 is smaller than the area of the second portion 512" and, therefore, most of the flow entering the upstream connection 51 comes from the connection opening 21 of the case 2. In particular, with the movable body 7 in such first intermediate position the air conveyance means 3 induce a pressure value at the perforated wall 22 of the case 2 that is lower than the ambient pressure value P (in a manner such to exert a suction force on the electrode) but greater than the minimum pressure value Pmin that they induce with the movable body 7 placed in the aforesaid first position.

In an entirely similar manner, in figure 4b the movable body 7 is represented in a second intermediate position, in particular closer to the second position than to the first position. In this situation, as seen in the imagine, the area of the fourth portion 522" of the downstream opening 522 is smaller than the area of the third portion 522" and, therefore, most of the flow exiting from the downstream connection 52 is directed towards the connection opening 21 of the case 2. In particular, with the movable body 7 in such second intermediate position, the air conveyance means 3 induce a pressure value at the perforated wall 22 of the case 2 that is greater than the ambient pressure value Pa (in a manner such to force the detachment of the electrode from the perforated wall 22 itself) but smaller than the maximum pressure value Pmax that they induce with the movable body 7 placed in the aforesaid second position.

Preferably, the ventilation duct 4 comprises at least one guide groove 47, which is made on the perimeter wall 46 and is extended along the extension axis X. In accordance with the embodiment represented in the enclosed figures, the ventilation duct 4 comprises two facing guide grooves 47, which are aligned with each other with respect to a direction perpendicular to the extension direction X.

Preferably, the first transverse wall 71 is slidably associated with the aforesaid guide groove 47 in a manner such that the guide groove 47 guides the movement of the first transverse wall 71 along the movement direction Y.

Advantageously, the first transverse wall 71 comprises at least one first guide appendage, which is extended projecting from the aforesaid first perimeter edge and is slidably inserted in a corresponding guide groove 47 of the ventilation duct 4 along the movement direction Y.

Preferably, the first transverse wall 71 comprises two first guide appendages, each of which slidably inserted in a corresponding guide groove 47 of the ventilation duct 4. Preferably, the second transverse wall 72 is slidably associated with the aforesaid guide groove 47 in a manner such that the guide groove 47 guides the movement of the first transverse wall 72 along the movement direction Y.

Advantageously, the second transverse wall 72 comprises at least one second guide appendage, which is extended projecting from the aforesaid second perimeter edge and is slidably inserted in a corresponding guide groove 47 of the ventilation duct 4 along the movement direction Y.

Preferably, the second transverse wall 72 comprises two second guide appendages, each of which slidably inserted in a corresponding guide groove 47 of the ventilation duct 4.

In accordance with the embodiment represented in the enclosed figures, the movable body 7 comprises a connection element 73 which is fixed to the aforesaid first transverse wall 71 and second transverse wall 72. In this manner, the first transverse wall 71 and the second transverse wall 72 are moved together along the movement direction Y.

Preferably, the connection element 73 comprises a longitudinal wall 731, which is extended parallel to the movement direction Y between the first transverse wall 71 and the second transverse wall 72.

Advantageously, the first transverse wall 71, the second transverse wall 73 and the longitudinal wall 73 are attained in a single body.

Preferably, the movable body 7 comprises an auxiliary wall 74, which is extended parallel to the movement direction Y starting from the second transverse wall 72 towards the discharge opening 42 of the ventilation duct 4. In this manner, when the movable body 7 is in the first position, the auxiliary wall 74 is interposed between two facing downstream openings 522, preventing the air flow exiting from one of the downstream connections 52 from not being directed towards the other downstream connection 52.

In accordance with the embodiment represented in the enclosed figures, the actuator 8 is advantageously mechanically connected to the ventilation duct 4 and to the first transverse wall 71 of the movable body 7 in order to move the latter between the first position and the second position.

According to the embodiment represented in the enclosed figures, the actuator 8 comprises a main body 81 mechanically fixed to the case 2, advantageously on the upper wall 23 of the latter, and a stem 82 slidably associated with the main body 82 and fixed to the first transverse wall 71 of the movable body 7 in order to move the latter along the movement direction Y.

Preferably, the main body 81 is placed outside the ventilation duct 4 and the stem 82 is placed to traverse the suction opening 41 of the ventilation duct 4 itself. Nevertheless, without departing from the protective scope of the present invention, the actuator 8 can be entirely placed within the ventilation duct 4.

Advantageously, the fan 5 comprises an impeller provided with a plurality of blades and an electric motor actuatable for rotating the impeller in a given rotation sense in order to generate an air flow from the upstream connection 51 towards the downstream connection 52. Consequently, the field of motion of the air within the ventilation duct 4 and of the case 2, which determines the level of suction and/or over-pressure at the perforated wall 22 of the case 2, substantially only depends on the configuration taken on by the shutter 6, and in particular by the position where the movable body 7 is placed.

In this manner, with the device 1, object of the present invention, it is possible to pass from a suction condition (in order to retain the electrode on the perforated wall 22) to a blowing condition (in order to force the detachment of the electrode from the perforated wall 22) without having to reverse the rotation sense of the impeller of the fan 5. In particular, such characteristic allows preventing delays in the application of the forces on the electrode due to the acceleration and deceleration ramp times, inevitable in the cases in which the rotation sense of the impeller must be reversed, thus increasing the precision of the device 1 itself in handling the electrode. In addition, the elimination of the aforesaid acceleration and deceleration ramp of the impeller during use of the device 1 allows reducing the wear of the electric motor and an energy savings that allow lowering the operating costs of the device 1 itself.

Also forming the object of the present invention is a handling apparatus for moving electrodes, which comprises a support structure intended to be abutted against the ground, and a handler, which is fixed to the support structure, is arranged in order to move electrodes and comprises a movable support frame, such as for example a stacker crane or an articulated arm, mechanically connected to the support structure itself.

According to the idea underlying the present invention, the handler comprises, in addition, a device 1 for picking up and releasing electrodes of the above-described type, regarding which the numerical references will be maintained for the sake of description simplicity. Such device 1 is mechanically supported by the movable support frame so as to move the electrodes. Advantageously, the device 1 can be provided with any characteristic that was previously described, and therefore will not be described once again hereinbelow.

Advantageously, the handling apparatus 1, object of the present invention, is adapted to be employed in a plant for producing electrolytic cells, in particular within a dry-room in order to execute the operation of stacking electrodes.

Without departing from the protective scope of the present invention, the device 1 can be mechanically fixed to a fixed work table, and in such case it is arranged for retaining an electrode in position during the performance of any one operation thereon during the production of electrolytic cells.

The invention thus conceived therefore attains the pre-established objects.

## Claims

1. Device for picking up and releasing electrodes for electrolytic cells, which comprises:
- a case (2), internally hollow, provided with at least one connection opening (21) and with at least one perforated wall (22) adapted to retain and release at least one electrode, said connection opening (21) and said perforated wall (22) being susceptible of being traversed by an air flow;
- air conveyance means (3) mechanically connected to said case (2) and in fluid communication with said connection opening (21) in order to force said air flow within said case (2) through said perforated wall (22); wherein said air conveyance means (3) comprise:
- a ventilation duct (4), which is placed in fluid connection with the connection opening (21) of said case (2) and with the outside environment through a suction opening (41) and a discharge opening (42);
- at least one fan (5), which is connected to said ventilation duct (4) by means of an upstream connection (51) and a downstream connection (52) with respect to the connection opening (21) of said case (2); said device (1) being **characterized in that** said air conveyance means (3) further comprise
- a shutter (6) placed to intercept said ventilation duct (4) and arranged to take on:
- at least one suction configuration, in which it places the downstream connection (52) of said ventilation duct (4) in fluid communication with the discharge opening (42) of said ventilation duct (4) and the upstream connection (51) of said ventilation duct (4) in fluid communication with the connection opening (21) of said case (2), suctioning air from the perforated wall (22) of said case (2) in order to retain a said electrode in abutment thereon;
- at least one blowing configuration, in which it places the upstream connection (51) of said ventilation duct (4) in fluid communication with the suction opening (41) of said ventilation duct (4) and the downstream connection (52) of said ventilation duct (4) in fluid communication with the connection opening (21) of said case (2) in order to suction air from the outside environment through the suction opening (41), blowing it through the perforated wall (22) of said case (2) in order to facilitate the detachment of a said electrode therefrom.

2. Device according to claim 1, **characterized in that** said shutter (6) is arranged in order to take on at least one intermediate configuration, in which it places the upstream connection (51) of said ventilation duct (4) in fluid communication with the suction opening (41) of said ventilation duct (4) and with the connection opening (21) of said case (2) and in which it places the downstream connection (52) of said ventilation duct (4) in fluid communication with the discharge opening (42) of said ventilation duct (4) and with the connection opening (21) of said case (2) in order to adjust the under-pressure and/or the over-pressure generated at the perforated wall (22) of said case (2).

3. Device according to claim 1 or 2, **characterized in that** said case (2) has substantially box-like shape and comprises:
- said perforated wall (22), which is substantially flat;
- an opposite upper wall (23), which is extended substantially parallel to said perforated wall (22); and
- a lateral wall (24) placed to connect between said perforated wall (22) and said upper wall (23);
wherein said air conveyance means (3) are mechanically connected to the upper wall (23) of said case (2) and wherein said connection opening (21) is attained on said upper wall (23).

4. Device according to any one of the preceding claims, **characterized in that** said ventilation duct (4) is extended along an extension direction (X) between said suction opening (41) and said discharge opening (42) and comprises:
- a central section (43), which is extended along said extension direction (X) between said upstream connection (51) and said downstream connection (52) and is in fluid communication with the connection opening (21) of said case (2);
- an inlet section (44), which is extended along said extension direction (X) between said suction opening (41) and said central section (43) and is in fluid communication with said upstream connection (51);
- an outlet section (45), which is extended along said extension direction (X) between said central section (43) and said discharge opening (42) and is in fluid communication with said downstream connection (52).

5. Device according to any one of the preceding claims, **characterized in that** said shutter (6) comprises:
- a movable body (7), which is slidably inserted in said ventilation duct (4) and is movable along a movement direction (Y) at least between a first position, in which said shutter (6) takes on said suction configuration, and a second position, in which said shutter (6) takes on said blowing configuration;
- at least one actuator (8) mechanically connected to said movable body (7) and actuatable to move said movable body (7) at least between said first position and said second position.

6. Device according to claim 4 and 5, **characterized in that** said movable body (7) comprises a first transverse wall (71), which is slidably inserted in the ventilation duct (4) and is placed to close a corresponding transverse section of said ventilation duct (4) in order to prevent the passage of air along the corresponding said transverse section; wherein, with said movable body (7) in said first position, said first transverse wall (71) is placed in the inlet section (44) of said ventilation duct (4), interposed between the suction opening (41) of said ventilation duct (4) and said upstream connection (51), and wherein with said movable body (7) in said second position, said first transverse wall (71) is placed in the central section (43) of said ventilation duct (4), interposed between the connection opening (21) of said case (2) and said upstream connection (51).

7. Device according to claim 6, **characterized in that** said actuator (8) is mechanically connected to said ventilation duct (4) and to the first transverse wall (71) of said movable body (7) in order to move said movable body (7) between said first position and said second position.

8. Device according to claim 4 and any one of claims 5 to 7, **characterized in that** said movable body (7) comprises a second transverse wall (72), which is slidably inserted in said ventilation duct (4) and is placed to close a corresponding transverse section of said ventilation duct (4) in order to prevent the passage of air along the corresponding said transverse section;
wherein, with said movable body (7) in said first position, said second transverse wall (72) is placed in the central section (43) of said ventilation duct (4), interposed between the connection opening (21) of said case (2) and said downstream connection (52), and wherein with said movable body (7) in said second position, said second transverse wall (72) is placed in the outlet section (45) of said ventilation duct (4), interposed between said downstream connection (52) and said discharge opening (42).

9. Device according to any one of the preceding claims, **characterized in that** said fan (5) comprises an impeller provided with a plurality of blades and an electric motor actuatable for rotating said impeller in a given rotation sense in order to generate an air flow from said upstream connection (51) to said downstream connection (52).

10. Handling apparatus for moving electrodes, which comprises:
- a support structure intended to be abutted against the ground;
- a handler, which is fixed to said support structure and is arranged for moving electrodes; said handler comprising a movable support frame mechanically connected to said support structure;
said handling apparatus being **characterized in that** said handler comprises a device (1) for picking up and releasing electrodes according to any one of the preceding claims mechanically supported by said movable support frame for moving said electrodes.

## Patentansprüche

1. Vorrichtung zum Aufnehmen und Freigeben von Elektroden für elektrolytische Zellen, die Folgendes umfasst:
- ein Gehäuse (2), innen hohl, das mit mindestens einer Anschlussöffnung (21) und mit mindestens einer perforierten Wand (22) versehen ist, die geeignet ist, mindestens eine Elektrode zurückzuhalten bzw. freizugeben, wobei die genannte Anschlussöffnung (21) und die genannte perforierte Wand (22) in der Lage sind, von einem Luftstrom überquert zu werden;
- Luftfördermittel (3), die mechanisch mit dem genannten Gehäuse (2) verbunden sind und in Fluidverbindung mit der genannten Anschlussöffnung (21) stehen, um den genannten Luftstrom innerhalb des Gehäuses (2) durch die genannte perforierte Wand (22) zu treiben;
wobei
die genannten Luftfördermittel (3) Folgendes umfassen:
- einen Lüftungskanal (4), der über eine Ansaugöffnung (41) und eine Auslassöffnung (42) mit der Anschlussöffnung (21) des genannten Gehäuses (2) und mit der äußeren Umgebung in Fluidverbindung steht;
- mindestens ein Gebläse (5), das mit dem genannten Lüftungskanal (4) über einen im Verhältnis zu der Anschlussöffnung (21) des genannten Gehäuses (2) vorgelagerten Anschluss (51) und einen nachgelagerten Anschluss (52) verbunden ist; wobei die genannte Vorrichtung (1) **dadurch gekennzeichnet ist, dass** die genannten Luftfördermittel (3) außerdem Folgendes umfassen
- eine Klappe (6), die so positioniert ist, dass sie den genannten Lüftungskanal (4) unterbricht, und darauf ausgelegt ist, folgende Konfigurationen anzunehmen:
- mindestens eine Ansaugkonfiguration, in der sie den nachgelagerten Anschluss (52) des genannten Lüftungskanals (4) in Fluidverbindung mit der Auslassöffnung (42) des genannten Lüftungskanals (4) und den vorgelagerten Anschluss (51) des genannten Lüftungskanals (4) in Fluidverbindung mit der Anschlussöffnung (21) des genannten Gehäuses (2) bringt und so Luft aus der perforierten Wand (22) des genannten Gehäuses (2) ansaugt, um eine daran anliegende genannte Elektrode zurückzuhalten;
- mindestens eine Gebläsekonfiguration, in der sie den vorgelagerten Anschluss (51) des genannten Lüftungskanals (4) in Fluidverbindung mit der Ansaugöffnung (41) des genannten Lüftungskanals (4) und den nachgelagerten Anschluss (52) des genannten Lüftungskanals (4) in Fluidverbindung mit der Anschlussöffnung (21) des genannten Gehäuses (2) bringt, um Luft aus der äußeren Umgebung über die Ansaugöffnung (41) anzusaugen und sie durch die perforierte Wand (22) des genannten Gehäuses (2) zu blasen, um die Ablösung einer genannten Elektrode davon zu erleichtern.

2. Vorrichtung nach Anspruch 1, **dadurch gekennzeichnet, dass** die genannte Klappe (6) so angeordnet ist, dass sie mindestens eine Zwischenkonfiguration annehmen kann, in der sie den vorgelagerten Anschluss (51) des genannten Lüftungskanals (4) in Fluidverbindung mit der Ansaugöffnung (41) des genannten Lüftungskanals (4) und mit der Anschlussöffnung (21) des genannten Gehäuses (2) bringt und in der sie den nachgelagerten Anschluss (52) des genannten Lüftungskanals (4) in Fluidverbindung mit der Auslassöffnung (42) des genannten Lüftungskanals (4) und mit der Anschlussöffnung (21) des genannten Gehäuses (2) bringt, um den an der perforierten Wand (22) des genannten Gehäuses (2) erzeugten Unterdruck und/oder Überdruck anzupassen.

3. Vorrichtung nach Anspruch 1 oder 2, **dadurch gekennzeichnet, dass** das genannte Gehäuse (2) eine im Wesentlichen kastenartige Form aufweist und Folgendes umfasst:
- die genannte perforierte Wand (22), die im Wesentlichen flach ist;
- eine gegenüberliegende obere Wand (23), die im Wesentlichen parallel zu der genannten perforierten Wand (22) verläuft; und
- eine Seitenwand (24), die so positioniert ist, dass sie eine Verbindung zwischen der genannten perforierten Wand (22) und der genannten oberen Wand (23) bildet;
wobei die genannten Luftfördermittel (3) mechanisch mit der oberen Wand (23) des genannten Gehäuses (2) verbunden sind und wobei die genannte Anschlussöffnung (21) an der oberen Wand (23) eingerichtet ist.

4. Vorrichtung nach einem beliebigen der vorangegangenen Ansprüche, **dadurch gekennzeichnet, dass** der genannte Lüftungskanal (4) entlang einer Verlaufsrichtung (X) zwischen der genannten Ansaugöffnung (41) und der genannten Auslassöffnung (42) verläuft und Folgendes umfasst:
- einen zentralen Abschnitt (43), der entlang der genannten Verlaufsrichtung (X) zwischen dem genannten vorgelagerten Anschluss (51) und dem genannten nachgelagerten Anschluss (52) verläuft und in Fluidverbindung mit der Anschlussöffnung (21) des genannten Gehäuses (2) steht;
- einen Einlassabschnitt (44), der entlang der genannten Verlaufsrichtung (X) zwischen der genannten Ansaugöffnung (41) und dem genannten zentralen Abschnitt (43) verläuft und in Fluidverbindung mit dem genannten vorgelagerten Anschluss (51) steht;
- einen Auslassabschnitt (45), der entlang der genannten Verlaufsrichtung (X) zwischen dem genannten zentralen Abschnitt (43) und der genannten Auslassöffnung (42) verläuft und in Fluidverbindung mit dem genannten nachgelagerten Anschluss (52) steht.

5. Vorrichtung nach einem beliebigen der vorangegangenen Ansprüche, **dadurch gekennzeichnet, dass** die genannte Klappe (6) Folgendes umfasst:
- einen beweglichen Körper (7), der verschiebbar in den genannten Lüftungskanal (4) eingesetzt ist und entlang einer Bewegungsrichtung (Y) mindestens zwischen einer ersten Position, in der die genannte Klappe (6) die genannte Ansaugkonfiguration annimmt, und einer zweiten Position, in der die genannte Klappe (6) die genannte Gebläsekonfiguration annimmt, bewegt werden kann;
- mindestens einen Aktuator (8), der mechanisch mit dem genannten beweglichen Körper (7) verbunden ist und betätigt werden kann, um den genannten beweglichen Körper (7) mindestens zwischen der genannten ersten Position und der genannten zweiten Position zu bewegen.

6. Vorrichtung nach Anspruch 4 und 5, **dadurch gekennzeichnet, dass** der genannte bewegliche Körper (7) eine erste Querwand (71) umfasst, die verschiebbar in den Lüftungskanal (4) eingesetzt und so positioniert ist, dass sie einen entsprechenden Querabschnitt des genannten Lüftungskanals (4) verschließt, um den Durchgang von Luft entlang des entsprechenden genannten Querabschnitts zu verhindern; wobei, wenn sich der genannte bewegliche Körper (7) in der genannten ersten Position befindet, die genannte erste Querwand (71) im Einlassabschnitt (44) des genannten Lüftungskanals (4), zwischen der Ansaugöffnung (41) des genannten Lüftungskanals (4) und dem genannten vorgelagerten Anschluss (51) eingefügt, positioniert ist und wobei, wenn sich der genannte bewegliche Körper (7) in der genannten zweiten Position befindet, die genannte erste Querwand (71) in dem zentralen Abschnitt (43) des genannten Lüftungskanals (4), zwischen der Anschlussöffnung (21) des genannten Gehäuses (2) und dem genannten vorgelagerten Anschluss (51) eingefügt, positioniert ist.

7. Vorrichtung nach Anspruch 6, **dadurch gekennzeichnet, dass** der genannte Aktuator (8) mechanisch mit dem genannten Lüftungskanal (4) und mit der ersten Querwand (71) des genannten beweglichen Körpers (7) verbunden ist, um den genannten beweglichen Körper (7) zwischen der genannten ersten Position und der genannten zweiten Position zu bewegen.

8. Vorrichtung nach Anspruch 4 und einem beliebigen der Ansprüche 5 bis 7, **dadurch gekennzeichnet, dass** der genannte bewegliche Körper (7) eine zweite Querwand (72) umfasst, die verschiebbar in den genannten Lüftungskanal (4) eingesetzt ist und so positioniert ist, dass sie einen entsprechenden Querabschnitt des genannten Lüftungskanals (4) verschließt, um den Durchgang von Luft entlang des entsprechenden genannten Querabschnitts zu verhindern;
wobei, wenn sich der genannte bewegliche Körper (7) in der genannten ersten Position befindet, die genannte zweite Querwand (72) in dem zentralen Abschnitt (43) des genannten Lüftungskanals (4), zwischen der Anschlussöffnung (21) des genannten Gehäuses (2) und dem genannten nachgelagerten Anschluss (52) eingefügt, positioniert ist, und wobei, wenn sich der genannte bewegliche Körper (7) in der genannten zweiten Position befindet, die genannte zweite Querwand (72) in dem Auslassabschnitt (45) des genannten Lüftungskanals (4), zwischen dem genannten nachgelagerten Anschluss (52) und der genannten Auslassöffnung (42) eingefügt, positioniert ist.

9. Vorrichtung nach einem beliebigen der vorangegangenen Ansprüche, **dadurch gekennzeichnet, dass** das genannte Gebläse (5) ein Laufrad mit einer Vielzahl von Flügeln und einen Elektromotor umfasst, der zum Drehen des genannten Laufrads in einer bestimmten Drehrichtung betätigt werden kann, um einen Luftstrom von dem genannten vorgelagerten Anschluss (51) zu dem genannten nachgelagerten Anschluss (52) zu erzeugen.

10. Handhabungsvorrichtung zum Bewegen von Elektroden, die Folgendes umfasst:
- eine Trägerstruktur, die dazu bestimmt ist, auf dem Boden anzuliegen;
- ein Handhabungsgerät, das an der genannten Trägerstruktur befestigt und für das Bewegen von Elektroden ausgelegt ist; wobei das genannte Handhabungsgerät einen beweglichen Tragrahmen umfasst, der mechanisch mit der genannten Trägerstruktur verbunden ist;
wobei die genannte Handhabungsvorrichtung **dadurch gekennzeichnet ist, dass** das genannte Handhabungsgerät eine Vorrichtung (1) zum Aufnehmen und Freigeben von Elektroden nach einem beliebigen der vorangegangenen Ansprüche umfasst, die mechanisch von dem genannten beweglichen Tragrahmen zum Bewegen der genannten Elektroden getragen wird.

## Revendications

1. Dispositif de préhension et de libération d'électrodes pour cellules électrolytiques, comprenant :
- un boîtier (2), intérieurement creux, pourvu d'au moins un orifice de raccordement (21) et d'au moins une paroi perforée (22) apte à retenir et libérer au moins une électrode, ledit orifice de raccordement (21) et ladite paroi perforée (22) étant susceptibles d'être traversés par un flux d'air ;
- des moyens d'acheminement d'air (3) reliés mécaniquement audit boîtier (2) et en communication fluidique avec ledit orifice de raccordement (21) afin de forcer ledit flux d'air à l'intérieur dudit boîtier (2) à travers ladite paroi perforée (22) ;
dans lequel
lesdits moyens d'acheminement d'air (3) comprennent :
- un conduit de ventilation (4), qui est placé en liaison fluidique avec l'orifice de raccordement (21) dudit boîtier (2) et avec l'environnement extérieur par un orifice d'aspiration (41) et un orifice de refoulement (42) ;
- au moins un ventilateur (5), qui est relié audit conduit de ventilation (4) au moyen d'un raccordement amont (51) et d'un raccordement aval (52) par rapport à l'orifice de raccordement (21) dudit boîtier (2) ; ledit dispositif (1) étant **caractérisé en ce que** lesdits moyens d'acheminement d'air (3) comprennent en outre :
- un obturateur (6) placé pour intercepter ledit conduit de ventilation (4) et agencé de manière à prendre :
- au moins une configuration d'aspiration, dans laquelle il place le raccordement aval (52) dudit conduit de ventilation (4) en communication fluidique avec l'orifice de refoulement (42) dudit conduit de ventilation (4) et le raccordement amont (51) dudit conduit de ventilation (4) en communication fluidique avec l'orifice de raccordement (21) dudit boîtier (2), aspirant l'air de la paroi perforée (22) dudit boîtier (2) afin de retenir ladite électrode en butée sur celui-ci ;
- au moins une configuration de soufflage, dans laquelle il place le raccordement amont (51) dudit conduit de ventilation (4) en communication fluidique avec l'orifice d'aspiration (41) dudit conduit de ventilation (4) et le raccordement aval (52) dudit conduit de ventilation (4) en communication fluidique avec l'orifice de raccordement (21) dudit boîtier (2) afin d'aspirer l'air de l'environnement extérieur à travers l'orifice d'aspiration (41), en le soufflant à travers la paroi perforée (22) dudit boîtier (2) afin de faciliter le détachement de ladite électrode de ce dernier.

2. Dispositif selon la revendication 1, **caractérisé en ce que** ledit obturateur (6) est agencé pour prendre au moins une configuration intermédiaire, dans laquelle il place le raccordement amont (51) dudit conduit de ventilation (4) en communication fluidique avec l'orifice d'aspiration (41) dudit conduit de ventilation (4) et avec l'orifice de raccordement (21) dudit boîtier (2) et dans laquelle il place le raccordement aval (52) dudit conduit de ventilation (4) en communication fluidique avec l'orifice de refoulement (42) dudit conduit de ventilation (4) et avec l'orifice de raccordement (21) dudit boîtier (2) afin d'ajuster la sous-pression et/ou la surpression générée au niveau de la paroi perforée (22) dudit boîtier (2).

3. Dispositif selon la revendication 1 ou 2, **caractérisé en ce que** ledit boîtier (2) est sensiblement en forme de boîte et comprend :
- ladite paroi perforée (22), qui est sensiblement plate ;
- une paroi supérieure opposée (23), qui s'étend sensiblement parallèlement à ladite paroi perforée (22) ; et
- une paroi latérale (24) placée pour relier ladite paroi perforée (22) et ladite paroi supérieure (23) ;
dans lequel lesdits moyens d'acheminement d'air (3) sont reliés mécaniquement à la paroi supérieure (23) dudit boîtier (2) et dans lequel ledit orifice de raccordement (21) est obtenu sur ladite paroi supérieure (23).

4. Dispositif selon l'une quelconque des revendications précédentes, **caractérisé en ce que** ledit conduit de ventilation (4) s'étend le long d'une direction d'extension (X) entre ledit orifice d'aspiration (41) et ledit orifice de refoulement (42) et comprend :
- une section centrale (43), qui s'étend le long de ladite direction d'extension (X) entre ledit raccordement amont (51) et ledit raccordement aval (52) et qui est en communication fluidique avec l'orifice de raccordement (21) dudit boîtier (2) ;
- une section d'entrée (44), qui s'étend le long de ladite direction d'extension (X) entre ledit orifice d'aspiration (41) et ladite section centrale (43) et qui est en communication fluidique avec ledit raccordement amont (51) ;
- une section de sortie (45), qui s'étend le long de ladite direction d'extension (X) entre ladite section centrale (43) et ledit orifice de refoulement (42) et qui est en communication fluidique avec ledit raccordement aval (52).

5. Dispositif selon l'une quelconque des revendications précédentes, **caractérisé en ce que** ledit obturateur (6) comprend :
- un corps mobile (7), qui est inséré de manière coulissante dans ledit conduit de ventilation (4) et qui est mobile le long d'une direction de mouvement (Y) au moins entre une première position, dans laquelle ledit obturateur (6) prend ladite configuration d'aspiration, et une deuxième position, dans laquelle ledit obturateur (6) prend ladite configuration de soufflage ;
- au moins un actionneur (8) relié mécaniquement audit corps mobile (7) et pouvant être actionné pour déplacer ledit corps mobile (7) au moins entre ladite première position et ladite deuxième position.

6. Dispositif selon les revendications 4 et 5, **caractérisé en ce que** ledit corps mobile (7) comprend une première paroi transversale (71), qui est insérée de manière coulissante dans le conduit de ventilation (4) et est placée pour fermer une section transversale correspondante dudit conduit de ventilation (4) afin d'empêcher le passage de l'air le long de ladite section transversale correspondante ; dans lequel, avec ledit corps mobile (7) dans ladite première position, ladite première paroi transversale (71) est placée dans la section d'entrée (44) dudit conduit de ventilation (4), interposée entre l'orifice d'aspiration (41) dudit conduit de ventilation (4) et ledit raccordement amont (51), et dans lequel, avec ledit corps mobile (7) dans ladite deuxième position, ladite première paroi transversale (71) est placée dans la section centrale (43) dudit conduit de ventilation (4), interposée entre l'orifice de raccordement (21) dudit boîtier (2) et ledit raccordement amont (51).

7. Dispositif selon la revendication 6, **caractérisé en ce que** ledit actionneur (8) est relié mécaniquement audit conduit de ventilation (4) et à la première paroi transversale (71) dudit corps mobile (7) afin de déplacer ledit corps mobile (7) entre ladite première position et ladite deuxième position.

8. Dispositif selon la revendication 4 et l'une quelconque des revendications 5 à 7, **caractérisé en ce que** ledit corps mobile (7) comprend une deuxième paroi transversale (72), qui est insérée de manière coulissante dans ledit conduit de ventilation (4) et est placée de manière à fermer une section transversale correspondante dudit conduit de ventilation (4) afin d'empêcher le passage de l'air le long de ladite section transversale correspondante ;
dans lequel, avec ledit corps mobile (7) dans ladite première position, ladite deuxième paroi transversale (72) est placée dans la section centrale (43) dudit conduit de ventilation (4), interposée entre l'orifice de raccordement (21) dudit boîtier (2) et ledit raccordement aval (52), et dans lequel, avec ledit corps mobile (7) dans ladite deuxième position, ladite deuxième paroi transversale (72) est placée dans la section de sortie (45) dudit conduit de ventilation (4), interposée entre ledit raccordement aval (52) et ledit orifice de refoulement (42).

9. Dispositif selon l'une quelconque des revendications précédentes, **caractérisé en ce que** ledit ventilateur (5) comprend une roue munie d'une pluralité de pales et un moteur électrique pouvant être actionné pour faire tourner ladite roue dans un sens de rotation donné afin de générer un flux d'air depuis ledit raccordement amont (51) vers ledit raccordement aval (52).

10. Appareil de manipulation pour déplacer des électrodes, comprenant :
- une structure de support destinée à venir en butée contre le sol ;
- un manipulateur, qui est fixé à ladite structure de support et qui est agencé pour déplacer les électrodes ; ledit manipulateur comprenant un cadre de support mobile relié mécaniquement à ladite structure de support ;
ledit appareil de manipulation étant **caractérisé en ce que** ledit manipulateur comprend un dispositif (1) de préhension et de libération d'électrodes selon l'une quelconque des revendications précédentes supporté mécaniquement par ledit cadre de support mobile pour déplacer lesdites électrodes.
